# EUROPÄISCHE PATENTANMELDUNG

(11) **EP 0 754 584 A2**
(43) Veröffentlichungstag der Anmeldung: **22.01.1997**
(21) Anmeldenummer: 96111076.4
(22) Anmeldetag: 10.07.1996
(51) Int. Cl.: B60J 10/00, B60J 1/00, B61D 25/00

(54) **Verfahren zum Entriegeln einer Fensterscheibe mit einem aufblasbaren Druckschlauch**

(30) Priorität: 15.07.1995 DE 19525833; 01.12.1995 DE 19544886
(71) Anmelder: DYNAMIT NOBEL AKTIENGESELLSCHAFT, 53840 Troisdorf (DE)
(72) Erfinder: Brede, Uwe, 90765 Fürth (DE); Bretfeld, Anton, 90765 Fürth (DE); Fibranz, Joachim, 90765 Fürth (DE); Kordel, Gerhard, 90455 Nürnberg (DE); Kraft, Josef, 92348 Berg (DE); Lehniger, Peter, 91056 Erlangen (DE); Reimer, Jens-Peter, 91074 Herzogenaurach. (DE)

(57) **Zusammenfassung**

Die Erfindung betrifft ein Verfahren zum Entriegeln einer Fensterscheibe (1) die über ein Befestigungselement an einem Rahmenelement (3) festliegt und zwischen der Fensterscheibe (1) und dem Rahmenelement (3) ein aufblasbarer Druckschlauch (4) angeordnet ist, der im aufgeblasenen Zustand die Fensterscheibe (1) aus dem Rahmenelement (3) drückt.

Zum sicheren und besseren Entriegeln der Fensterscheibe wird vorgeschlagen, daß der Druckschlauch (4) im Betätigungsfall von zumindest einem pyrotechnischen Gasgenerator (7) aufgeblasen wird.

## Beschreibung

Die Erfindung betrifft ein Verfahren zum Entriegeln einer Fensterscheibe mit einem aufblasbaren Druckschlauch nach dem Oberbegriff des Anspruchs 1.

Moderne Eisenbahnwaggons werden häufig mit Klimaanlagen ausgestattet. Dies bedingt die Forderung nach einer höheren Wärmedämmung der Fenster. Bei Hochgeschwindigkeitszügen kommt zusätzlich noch die Forderung nach einer guten Schallisolierung und einer großen dynamischen Festigkeit (Ein-/Ausfahrt von Tunnels, Züge auf dem Gegengleis) hinzu. Aufgrund dieser gestiegenen Anforderungen werden Fenster verlangt, die eine so hohe Stabilität besitzen, daß sie manuell (vor allem in der Dunkelheit oder bei Panik-Situationen) nicht mehr zerstört bzw. geöffnet werden können. Um diese Forderungen erfüllen zu können, werden in modernen Hochgeschwindigkeitszügen Isolierglasfenster verbunden mit Verbundglasscheiben verwendet. In gepanzerten Kraftfahrzeugen ist diese Problematik aufgrund der Verwendung von beschußhemmenden Scheiben besonders ausgeprägt.

Aus der DE-A1-39 25 430 ist eine Entriegelungsvorrichtung für eine Fensterscheibe bekannt, die über ein Dichtungsprofil mit einem Rahmenelement verbunden ist, wobei die Fensterscheibe über ein Befestigungselement am Rahmenelement befestigt ist. In diesem oder am Befestigungselement ist ein mit Gas füllbarer, verformbarer Schlauch angeordnet, der im aufgeblasenen Zustand die Befestigung der Fensterscheibe aufreißt, so daß die Fensterscheibe aus dem Rahmenelement fällt.

Der Erfindung liegt die Aufgabe zugrunde, ein Verfahren zum Entriegeln einer Fensterscheibe nach dem Oberbegriff des Anspruchs 1 zu schaffen, die mit einfachen Mitteln nahezu 100 %-ig sicherstellt, daß im Notfall die Fensterscheibe aus dem Rahmen fällt.

Erfindungsgemäß wird diese Aufgabe dadurch gelöst, daß der Druckschlauch im Betätigungsfall von zumindest einem pyrotechnischen Gasgenerator aufgeblasen wird.

Gasgeneratoren werden heute in hohen Stückzahlen produziert und sind absolut zuverlässig. Außerdem benötigen sie nur sehr wenig Platz, so daß diese direkt in den Rahmen der Fensterscheibe integriert werden können. Die Zündung erfolgt elektrisch entweder zentral für mehrere Fensterscheiben z.B. durch eine Steuerelektronik oder aber dezentral für jede Fensterscheibe getrennt.

Vorteilhafterweise wird der Druckschlauch im Betätigungsfall von mehr als einem Gasgenerator aufgeblasen. Hierdurch ist die Sicherheit nochmals erheblich gesteigert, da bei Ausfall eines Gasgenerators der oder die anderen dessen Funktion übernehmen. In einer speziellen vorteilhaften Ausführungsform wird der Druckschlauch von zwei auf jeder Längsseite der Fensterscheibe angeordneten Gasgeneratoren aufgeblasen.

Hierbei ist zweckmäßigerweise jeder Gasgenerator über ein Anschlußstück mit dem Druckschlauch verbunden. Erfindungsgemäß kann jedoch auch der Druckschlauch über mehrere Anschlußstücke mit z.B. einem einzigen Gasgenerator verbunden sein.

In bevorzugter Ausführungsform ist die Fensterscheibe in Auswurfrichtung über eine Feder kraftbeaufschlagt. Hierdurch ist ein vollständiges Auswerten der Fensterscheibe auch unter ungünstigen Bedingungen sichergestellt.

Erfindungsgemäß läßt sich dieses Verfahren vorteilhaft für Fensterscheiben in Eisenbahnwaggons oder in Kraftfahrzeugen verwenden. Besonders wenn die Fensterscheiben eingeklebt sind, d.h. wenn das Befestigungselement ein Klebstoff ist, ist dieses Verfahren zweckmäßig, da der Klebstoff durch die mechanischen Kräfte, die der Druckschlauch auf ihn ausübt, in eine für ihn ungünstige Weise belastet wird. Die Klebeverbindung wird so gelöst.

Weitere Merkmale der Erfindung ergeben sich aus den Figuren, die nachfolgend beschrieben werden. Es zeigt:
- Fig. 1: einen Ausschnitt aus einer Fensterscheibe für Eisenbahnwaggons mit einem aufblasbaren Druckschlauch,
- Fig. 2: eine beispielhafte Anordnung von Gasgeneratoren am Druckschlauch und
- Fig. 3: eine Ausführungsform mit eingeklebter Fensterscheibe.

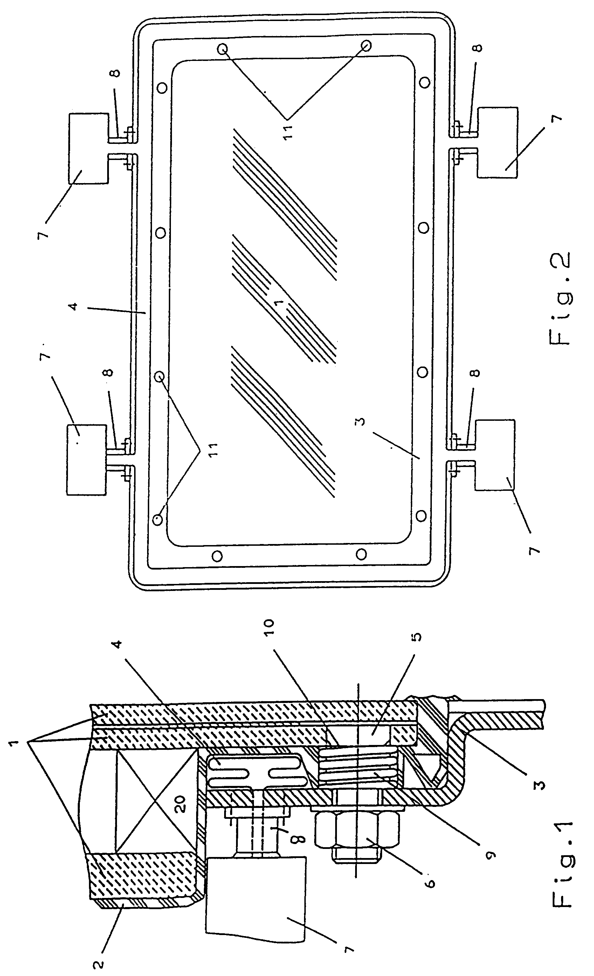

Die Figur 1 zeigt eine Entriegelungsvorrichtung mit einer Fensterscheibe 1, die aus einer Isolierglas-Verbundscheibe mit drei Scheiben besteht. Zwei nach außen gerichtete Verbundglasscheiben sind über einen Abstandshalter 20 mit einer dritten Scheibe verbunden. Über ein Dichtungsprofil 2 ist die Fensterscheibe 1 mit einem Rahmenelement 3 verbunden. Die eigentliche Befestigung erfolgt über ein Befestigungselement, welches aus einer Gewindeschraube 5 und einer Mutter 6 besteht. Die Gewindeschraube 5 besteht aus einem zylinderförmigen Rohr mit einem Außengewinde und aus einer kragenförmigen endseitigen Erweiterung. Zur Befestigung ist die zur Fensterscheibe 1 gewandte kragenförmige Erweiterung zwischen die Verbundscheiben eingesetzt. Über die Mutter 6, die auf das Gewinde der Gewindeschraube 5 aufgeschraubt ist, ist die Gewindeschraube 5 und damit die Fensterscheibe 1 mit dem Rahmenelement 3 fest verbunden, da die Gewindeschraube 5 das Rahmenelement 3 durchragt und die Mutter 6 von außen über einen Distanzring auf dem Rahmenelement 3 aufliegt.

Zum besseren Auswerfen der Fensterscheibe ist die Gewindeschraube 5 von einer Feder 9 umgeben, die sich einerseits am Rahmenelement 3 und andererseits an der Fensterscheibe 1 in Auswurfrichtung abstützt.

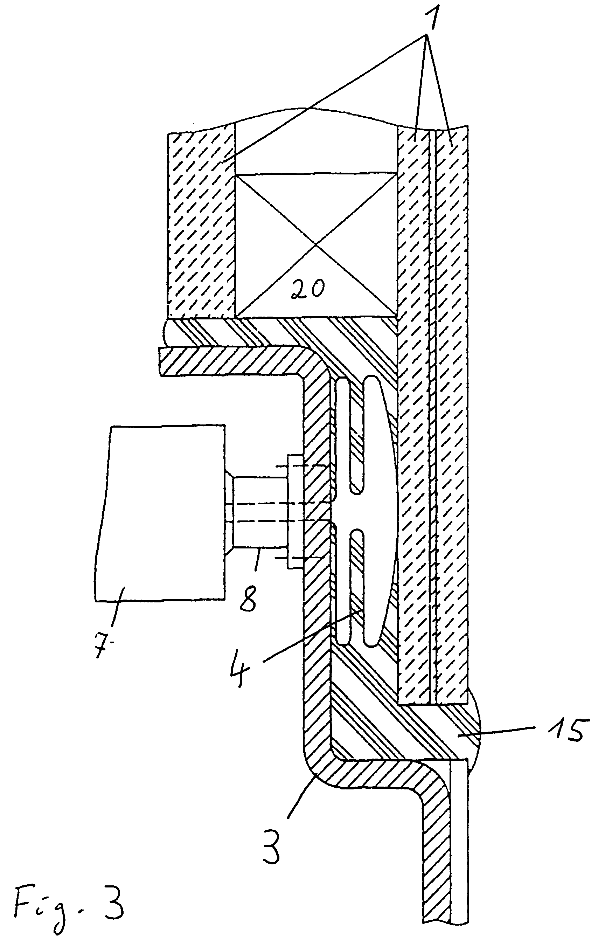

Alternativ wird die Scheibe (siehe Fig. 3) in die Rahmenstruktur geklebt, wobei der Kleber nach dem Aushärten sowohl Dichtfunktionen übernimmt, als auch Kräfte zwischen Rahmen und Scheibe übertragen kann.

In einem Hohlraum zwischen dem Rahmenelement 3 und der Fensterscheibe 1 bzw. dem Dichtungsprofil 2 ist ein gefalteter Druckschlauch 4 eingesetzt, der über ein Anschlußstück 8 mit einem pyrotechnischen Gasgenerator 7 in Verbindung steht. Im Gasgenerator 7 ist, wie allgemein üblich, ein gaserzeugendes Material angeordnet, welches nach Zündung durch ein elektrisches Anzündelement ein Druckgas erzeugt. Dieses Druckgas gelangt über das Anschlußstück 8 in den Druckschlauch 4 und bläst diesen auf. Da das sich daraus ergebende Volumen des Druckschlauches 4 größer ist als der für den Druckschlauch 4 zur Verfügung stehende Hohlraum, wird durch die auf die Gewindeschraube 5 wirkenden Kräfte diese abgerissen und die Fensterscheibe 1 aus dem Rahmenelement 3 gestoßen. Vorteilhafterweise ist in der Gewindeschraube 5 eine Sollbruchstelle 10 angeordnet, so daß im Betätigungsfall die Sollbruchstelle 10 aufbricht und die Fensterscheibe 1 unzerstört aus dem Rahmenelement 3 gestoßen wird.

Figur 2 zeigt eine bevorzugte Anordnung der Gasgeneratoren 7. Auf jeder Längsseite der Fensterscheibe 1 sind zwei Generatoren 7 angeordnet, die jeweils über ein Anschlußstück 8 mit dem Druckschlauch 4 verbunden sind. Mit dem Bezugszeichen 11 ist das Befestigungselement bestehend aus Gewindeschraube 5 und Mutter 6 angedeutet (siehe Fig. 1).

Damit keine Personen beim Auswerfen der Fensterscheibe 1 verletzt werden, kann die Fensterscheibe 1 mit dem Rahmenelement 3 über eine nicht gezeigte Haltevorrichtung verbunden sein.

Fig. 3 zeigt eine Ausführungsform mit eingeklebter Fensterscheibe 1. Der Klebstoff ist mit dem Bezugszeichen 15 bezeichnet und ist zwischen dem Rahmenelement 3 und der Fensterscheibe 1 angeordnet. Im Klebstoff 15 ist der Druckschlauch 4 eingebettet. Der Klebstoff 15 kann auch vorteilhafterweise als Hohlraum geformt sein, so daß der Hohlraum die Funktion des Druckschlauchs übernimmt und kein spezieller Druckschlauch erforderlich ist. Gelangt Druckgas in diesen Hohlraum bzw. in den Druckschlauch, dann weitet sich dieser und die Fensterscheibe 1 wird aus dem Rahmenelement 3 gedrückt. Die weiteren Bezugszeichen in der Fig. 3 bezeichnen dieselben Gegenstände wie in Fig. 1.

Unter einem Klebstoff 15 ist z. B. auch eine Silikonmasse verstanden.

## Patentansprüche

1. Verfahren zum Entriegeln einer Fensterscheibe (1) die über ein Befestigungselement an einem Rahmenelement (3) festliegt und zwischen der Fensterscheibe (1) und dem Rahmenelement (3) ein aufblasbarer Druckschlauch (4) angeordnet ist, der im aufgeblasenen Zustand die Fensterscheibe (1) aus dem Rahmenelement (3) drückt, **dadurch gekennzeichnet**, daß der Druckschlauch (4) im Betätigungsfall von zumindest einem pyrotechnischen Gasgenerator (7) aufgeblasen wird.

2. Verfahren nach Anspruch 1, **dadurch gekennzeichnet**, daß der Druckschlauch (4) von zwei auf jeder Längsseite der Fensterscheibe (1) angeordneten Gasgeneratoren (7) aufgeblasen wird.

3. Verfahren nach Anspruch 1 oder 2, **dadurch gekennzeichnet**, daß der Druckschlauch (4) über zumindest ein Anschlußstück (8) mit dem Gasgenerator (7) verbunden ist.

4. Verfahren nach einem der Ansprüche 1 bis 3, **dadurch gekennzeichnet**, daß die Fensterscheibe (1) in Auswurfrichtung über eine Feder (9) kraftbeaufschlagt ist.

5. Verfahren nach einem der Ansprüche 1 bis 4, **dadurch gekennzeichnet**, daß dieses Verfahren für Fensterscheiben in Eisenbahnwaggons verwendet wird.

6. Verfahren nach einem der Ansprüche 1 bis 4, **dadurch gekennzeichnet**, daß dieses Verfahren für Fensterscheiben in Kraftfahrzeugen verwendet wird.

7. Verfahren nach einem der Ansprüche 1 bis 6, **dadurch gekennzeichnet**, daß das Befestigungselement ein Klebstoff 15 ist.
